Europäisches Patentamt

European Patent Office

Office européen des brevets

(19)

(11) **EP 1 617 577 A2**

(12) **EUROPEAN PATENT APPLICATION**

(43) Date of publication:
    **18.01.2006 Bulletin 2006/03**

(51) Int Cl.:
    ***H04B 10/158*** (2006.01)

(21) Application number: **05013834.6**

(22) Date of filing: **27.06.2005**

(84) Designated Contracting States:
    **AT BE BG CH CY CZ DE DK EE ES FI FR GB GR
    HU IE IS IT LI LT LU MC NL PL PT RO SE SI SK TR**
    Designated Extension States:
    **AL BA HR LV MK YU**

(30) Priority: **16.07.2004 JP 2004210770**

(71) Applicant: **NEC Compound Semiconductor
    Devices, Ltd.
    Kawasaki, Kanagawa 211-8666 (JP)**

(72) Inventor: **Tamai, Hidefumi
    Kawasaki
    Kanagawa 211-8666 (JP)**

(74) Representative: **Glawe, Delfs, Moll
    Patentanwälte
    Postfach 26 01 62
    80058 München (DE)**

(54) **Isolator for an optical receiver**

(57)    The isolator includes a photodiode (first photodiode), a first and a second amplifier, and a carrier discharging circuit. The photodiode is an input element that converts an optical signal input from an LED (signal source) into an electrical signal, and outputs the electrical signal to the first amplifier. The first amplifier includes two bipolar transistors, and amplifies the electrical signal output by the photodiode. The first amplifier also includes three resistances, one of which is a feedback resistance. The second amplifier has a similar structure to that of the first amplifier. The carrier discharging circuit is connected to the base of the bipolar transistor in the first amplifier and to the base of the bipolar transistor in the second amplifier, so as to discharge, when the photodiode turns off, a carrier accumulated in these bases when the photodiode PD1 is on.

FIG. 1

WHEN LED IS ON : ⟶
WHEN LED IS OFF : - - - - ⟶

## Description

This application is based on Japanese patent application No.2004-210770, the content of which is incorporated hereinto by reference.

BACKGROUND OF THE INVENTION

[Field of the Invention]

The present invention relates to an isolator.

[Related Art]

An isolator is a device that transmits a signal from a signal source such as a light or a magnetic field to a master receiver, and converts the signal into an electrical signal in an IC on the receiving side. With respect to apparatuses such as a servo, an inverter or a color PDP, in which such an isolator outputting a signal to an IC is employed, there has been a demand for an isolator that provides a higher signal transmission speed and a larger overload capacity against a noise such as a source fluctuation or a CMR (a noise which incurs an error in an IC circuit from a displacement current between the signal source and the master receiver).

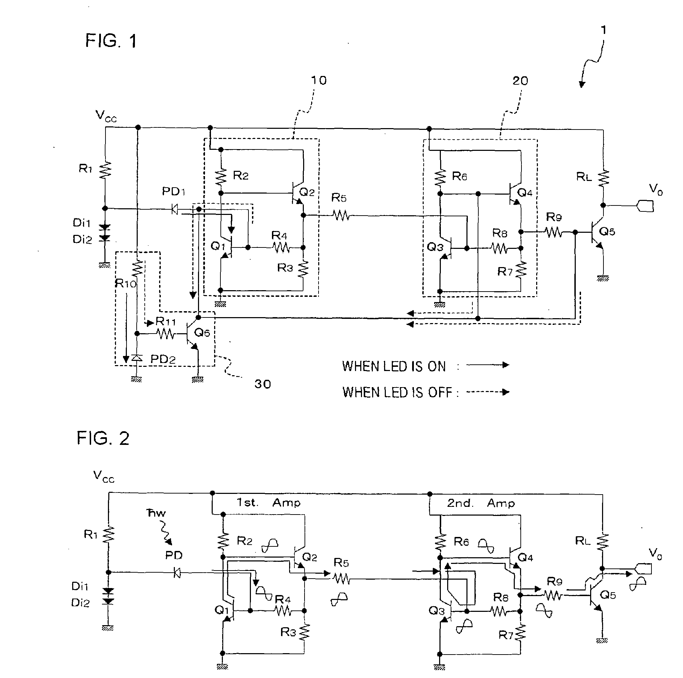

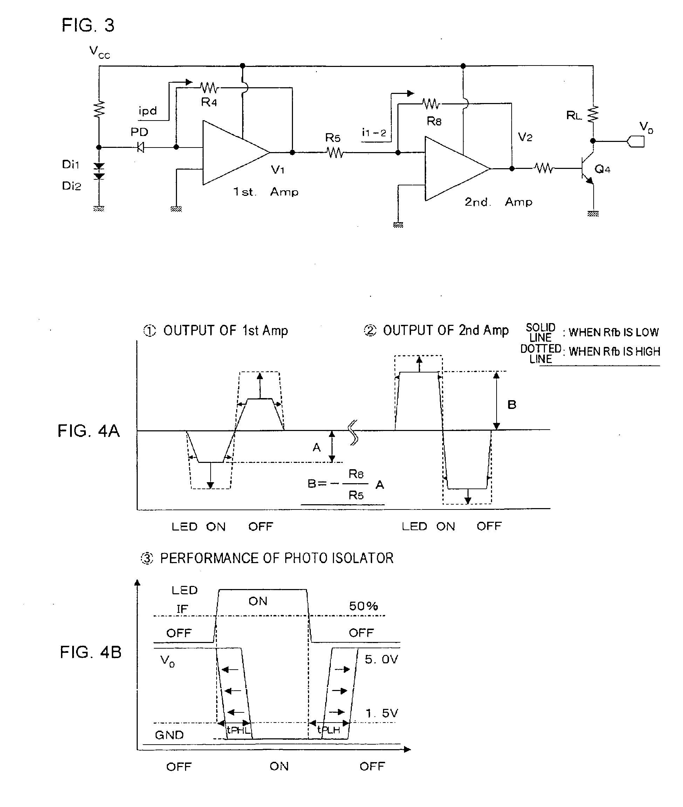

Fig. 2 is a circuit diagram of a conventional isolator. Fig. 3 is a block diagram of the same isolator. Such an isolator is disclosed for example in Japanese Patent Publication No.3395168 and Japanese Laid-Open Patent Publication No.S62-242416. This isolator comprises a photodiode (hereinafter abbreviated as PD) that converts an optical signal from an LED into an electrical signal, and a two-stage signal amplifier (hereinafter, 1st Amp and 2nd Amp, or simply Amp) that includes a plurality of transistors (hereinafter, Tr) and feedback resistances (hereinafter, $R_{fb}$) and amplifies the electrical signal. A load resistance $R_L$ is provided between a source voltage (hereinafter, $V_{cc}$) and an output terminal $V_0$. The isolator is also provided with an output stage including a Tr outputting a digital logic from the terminal $V_0$, and diodes Di1, Di2 applying a reverse bias to the PD so as to form a depletion layer that allows sufficient photoelectric conversion.

Referring to Fig. 2, the operation of the isolator will be described. When the LED is turned on, the PD converts an optical signal from the LED into an electrical signal, so that a signal carrying a high logic level is input to the base of TrQ1. Since the phase is inverted between the base and a collector, the base of TrQ2 is a low level. Between the base and an emitter, a common phase transmission is performed and hence the 1stAmp outputs a low logic level. When such signal enters the base of TrQ3 in the 2ndAmp, since the output phase is inverted as in the 1stAmp, the 2ndAmp outputs a high logic level. This turns on TrQ5 in the output stage, the output terminal $V_0$ outputs a low logic level. By contrast, when the LED is turned off, the respective foregoing logics are inverted, and consequently the TrQ5 is turned off.

Proceeding to Fig. 3, a signal amplification factor in the circuit shown in Fig. 2 will be described. According to the theory of virtual short, a photocurrent $i_{pd}$ converted by the PD runs to a feedback resistance R4 in the lstAmp, and therefore the output potential V1 of the lstAmp can be defined as below.

$$V1 = -R4 \cdot i_{pd} \quad \dots \quad (1)$$

Upon applying the theory of virtual short to the 2ndAmp, an interstage current $i_{1-2}$ running between the two Amps can be defined as below.

$$i_{1-2} = V1/R5 \quad \dots \quad (2)$$

Since the interstage current $i_{1-2}$ runs through a feedback resistance R8 in the 2ndAmp, the output potential V2 of the 2ndAmp can be defined as below.

$$V2 = -R8 \cdot i_{1-2} \quad \dots \quad (3)$$

Erasing the $i_{1-2}$ from these equations (1) to (3) leads to the following equation.

$$V2 = (R4 \cdot R8/R5) \cdot i_{pd}$$

Accordingly, the amplification factor in the circuit as a whole is represented by (R4·R8/R5), which is proportional to the feedback resistances R4, R8 of the respective Amps.

SUMMARY OF THE INVENTION

From the viewpoint of upgrading the overload capacity against a noise, it is desirable to grant a large amplification factor to the isolator. In a conventional isolator, however, increasing the amplification factor leads to a disadvantage of a reduced operating speed.

Such aspect will be described referring to Figs. 4A and 4B. Fig. 4A illustrates the respective output waveshape models of the 1stAmp and the 2ndAmp in the case where the $R_{fb}$ (namely R4, R8) are increased. Fig. 4B illustrates a waveshape model of a forward current IF input to the LED of the photo isolator and a waveshape model of an output from the terminal $V_0$.

As shown in Fig. 4A, increasing the $R_{fb}$ of the respective Amps leads to an increase in output amplitude of the Amps. Accordingly the output current from the Amps also increases, and hence a considerable amount of carrier remains in the base of the associated Tr when the LED turns off. Meanwhile, with respect to a signal transmission delay, the waveshape on the LED-on side quickly falls while the waveshape on the LED-off side delays in rising, in the lstAmp. In the 2ndAmp, the waveshape on the LED-on side quickly rises, while the waveshape on the LED-off side delays in falling. Consequently, the photo isolator performs so that a tPHL (a delay from the time at which the forward current IF rises to 50% of the rising pulse waveheight of the LED to the time at which the output potential $V_0$ of IC drops to 1.5V) becomes shorter, while a tPLH (a delay from the time at which the forward current IF drops to 50% of the falling pulse waveheight of the LED to the time at which the output potential $V_0$ of IC rises to 1.5V) becomes longer.

According to the present invention, there is provided an isolator comprising: an input element inputting a signal from a signal source and outputting the signal in a form of an electrical signal; an amplifier including a bipolar transistor and amplifying the electrical signal output by the input element; and a carrier discharging circuit connected to a base of the bipolar transistor and discharging, when the input element is off, a carrier accumulated in the base when the input element is on.

In this isolator, when the input element is turned off, the carrier discharging circuit discharges the residual carrier out of the base of the bipolar transistor included in the amplifier. Therefore, the isolator can still operate at a high speed despite increasing the amplification factor of the amplifier. Examples of the input element herein referred to include a photoelectric converter such as a photodiode, or an electromagnetic converter such as a coil.

In the isolator according to the present invention, the carrier discharging circuit may include a second bipolar transistor in which a portion between a collector and an emitter serves as a part of a discharging path of the carrier; and the second bipolar transistor may be set to be off when the input element is on, and to be on when the input element is off. The carrier discharging circuit thus constructed can discharge the residual carrier out of the base at a high speed.

The isolator according to the present invention may be a photo isolator having a first photodiode serving as the input element; and the carrier discharging circuit may include a second photodiode switching the second bipolar transistor on and off. Such a configuration simplifies the structure for switching the second bipolar transistor on and off.

In the isolator according to the present invention, the second bipolar transistor may have its collector connected to the base of the bipolar transistor included in the amplifier, its base connected to a power source via a first and a second resistances serially connected to each other, and its emitter connected to the ground; and the second photodiode may have its anode connected to the ground, and its cathode connected to a path between the first resistance and the second resistance.

Such a configuration achieves a carrier discharging circuit having a simple structure yet capable of discharging the residual carrier out of the base at a high speed.

In the isolator according to the present invention, the amplifier may include a feedback resistance, and a resistance value of the feedback resistance may serve as a parameter to determine an amplification factor of the amplifier. In this case, simply adjusting the resistance value of the feedback resistance allows readily setting the amplification factor of the amplifier at a desired value. Increasing the amplification factor does not affect the high-speed operation of the isolator, as described above.

In the isolator according to the present invention, there may be provided a plurality of the amplifiers, and the carrier discharging circuit may be connected to a base of a bipolar transistor included in each of the amplifiers. This allows achieving a still greater amplification factor of the isolator as a whole, while maintaining the high-speed operation.

The isolator according to the present invention may further comprise a third bipolar transistor constituting an output stage of this isolator, and the carrier discharging circuit may be connected to a base of the third bipolar transistor. In this case also, since the residual carrier accumulated in the base of the third bipolar transistor is discharged through the carrier discharging circuit, the high-speed operation of the isolator is not affected..

Accordingly, the present invention provides an isolator that allows increasing the amplification factor without compromise in the operating speed.

BRIEF DESCRIPTION OF THE DRAWINGS

The above and other objects, advantages and features of the present invention will be more apparent from the following description taken in conjunction with the accompanying drawings, in which:

Fig. 1 is a circuit diagram of an isolator according to an embodiment of the present invention;
Fig. 2 is a circuit diagram of a conventional isolator;
Fig. 3 is a block diagram of a conventional isolator; and
Figs. 4A and 4B are graphic diagrams for explaining an operation of a conventional isolator.

DETAILED DESCRIPTION OF THE INVENTION

The present invention will be now described herein with reference to illustrative embodiments. Those skilled in the art will recognize that many alternative embodiments can be accomplished using the teachings of the present invention and that the invention is not limited to the embodiments illustrated for explanatory purposed.

Referring to the accompanying drawings, preferred embodiments of the isolator according to the present invention will be described in details hereunder. Same constituents are given an identical numeral in the drawings, and duplicating description will be omitted where appropriate.

Fig. 1 is a circuit diagram of an isolator according to an embodiment of the present invention. The isolator 1 is a photo isolator including a photodiode PD1 (first photodiode), amplifiers 10, 20, and a carrier discharging circuit 30.

The photodiode PD1 is an input element that converts an optical signal input from an LED (signal source, not shown) into an electrical signal, and outputs the electrical signal to the amplifier 10. The amplifier 10 includes two bipolar transistors Q1, Q2, and amplifies the electrical signal output by the photodiode PD1. The amplifier 10 also includes three resistances R2 to R4, among which the resistance R4 is a feedback resistance. The amplifier 20 has a similar structure to that of the amplifier 10. Specifically, the amplifier 20 includes two bipolar transistors Q3, Q4 and amplifies the electrical signal input from the amplifier 10 via a resistance R5. The amplifier 20 also includes three resistances R6 to R8, among which the resistance R8 is a feedback resistance. Now, the amplification factor of an entirety of the isolator 1 can be defined as (R4·R8/R5) as stated referring to Fig. 3, which is proportional to the feedback resistance R4, R8 of the respective Amps. In other words, the feedback resistances R4, R8 serve as the parameter to determine an amplification factor.

The carrier discharging circuit 30 is connected to the base of the bipolar transistor Q1 included in the amplifier 10 and to the base of the bipolar transistor Q4 included in the amplifier 20, so as to discharge, when the photodiode PD1 turns off, a carrier accumulated in these bases while the photodiode PD1 is on. The carrier discharging circuit 30 includes a bipolar transistor Q6 (second bipolar transistor) and a photodiode PD2 (second photodiode). A portion between the collector and the emitter of the bipolar transistor Q6 serves as a part of the discharging path of the carrier. The photodiode PD2 serves to turn on and off the bipolar transistor Q6. Under such structure, the bipolar transistor Q6 is tuned off when the photodiode PD1 is on, and turned on when the photodiode PD1 is off.

To be more detailed, the collector of the bipolar transistor Q6 is connected to the base of the bipolar transistor Q1 and the base of the bipolar transistor Q4 respectively, and the emitter of the bipolar transistor Q6 is connected to the ground. The base of the bipolar transistor Q6 is connected to a power source $V_{cc}$ via resistance R10, R11 serving for current restriction. The resistances R10, R11 are serially connected. The anode of the photodiode PD2 is connected to the ground, while the cathode is connected to a path between the resistance R10 and the resistance R11. The resistance values of the resistances R10, R11 are determined so that the photodiode PD2 is on and a current does not flow into the base of the bipolar transistor Q6, when the LED is on.

The isolator 1 also includes a bipolar transistor Q5 (third bipolar transistor) that constitutes the output stage of the isolator 1. To the base of the bipolar transistor Q5 also, the carrier discharging circuit 30 is connected.

Further, a load resistance $R_L$ is provided between a power source and an output terminal $V_0$. The isolator 1 also includes diodes Di1, Di2, that apply a reverse bias to the photodiode PD1 so as to form a depletion layer required for adequately performing the photoelectric conversion. The diodes Di1 and Di2 are serially connected, and the anode of the diode Di1 is connected to the photodiode PD1, while the cathode of the diode Di2 is connected to the ground. Also, a path between the anode of the diode Di1 and the photodiode PD1 and the power source $V_{cc}$ are connected via a resistance R1.

The isolator 1 operates as follows. When the LED is turned on, the photodiode PD1 converts an optical signal from the LED into an electrical signal, so that thereby a high logic level signal is input to the base of the bipolar transistor Q1. Accordingly, the base of the bipolar transistor Q2 outputs a low level signal and hence the amplifier 10 outputs a low logic level. Such signal is input to the base of the bipolar transistor Q3 in the amplifier 20. Since the output phase is inverted in the amplifier 20 as in the amplifier 10, the amplifier 20 outputs a high logic level. This turns on the bipolar transistor Q5 in the output stage, and therefore the output terminal $V_0$ outputs a low logic level. Here, when the LED is on, since the photodiode PD2 is also turned on, a current is not supplied to the base of the bipolar transistor Q6, and hence the bipolar transistor Q6 is turned off.

On the other hand, when the LED is turned off, each of the foregoing logics is inverted, and therefore the bipolar transistor Q5 is turned off. Since the photodiode PD2 is turned off when the LED is off, the power source $V_{cc}$ supplies a current to the base of the bipolar transistor Q6, thus to turn on the bipolar transistor Q6. Such action excludes to the ground a residual carrier remaining in the base of the bipolar transistor Q1 in the amplifier 10 and the base of the bipolar transistor Q4 in the amplifier 20, respectively actuated when the LED is on, and in the base of the bipolar transistor Q5 in the output stage, via the bipolar transistor Q6.

The following passage covers the benefits offered by the isolator 1. In the isolator 1, when the photodiode PD1 is turned off, the carrier discharging circuit 30 forcibly excludes a residual carrier from the base of the bipolar transistors Q1, Q4 and Q5 at a time. This allows the isolator 1 to equally perform a high-speed operation despite increasing an amplification factor of the amplifiers 10, 20. Accordingly, since the amplification factor can be increased without compromise in the operating speed, improvement both in the overload capacity against a noise and in the photosensitivity essential to a photo isolator can be achieved.

Meanwhile, Japanese Patent Publication No.3395168 and Japanese Laid-Open Patent Publication No.S62-242416 both disclose a circuit that discharges a residual carrier out of a transistor. The former discloses a semiconductor relay circuit including a lateral PNP transistor that discharges a carrier accumulated between a gate and a source of an output MOSFET. The latter discloses an optical amplifier including a junction FET (Field Effect Transistor) having a similar function.

In the above publications, however, it is a FET that the residual carrier is to be removed from. In a FET, the residual carrier is a minor issue compared with a bipolar transistor. Therefore, it does not make much sense in providing a carrier discharging circuit to the circuits described in the publications. On the other hand, in the isolator 1, the bipolar transistor is the object from which the residual carrier is to be removed. Since the residual carrier constitutes a major problem to the bipolar transistor, providing the carrier discharging circuit 30 is extremely beneficial.

The carrier discharging circuit 30 includes the bipolar transistor Q6, in which a portion between the collector and the emitter constitutes a part of the carrier discharging path, and is designed so that the bipolar transistor Q6 is turned off when the photodiode PD1 is on, and is tuned on when the photodiode PD1 is off. With such structure, the carrier discharging circuit 30 can discharge a residual carrier out of the base at a high speed.

The carrier discharging circuit 30 includes the photodiode PD2 that switches the bipolar transistor Q6 on and off. Thus a simple structure that can turn on and off the bipolar transistor Q6 can be provided.

The bipolar transistor Q6 has its collector connected to the base of the bipolar transistors Q1, Q4, Q5, its base connected to the power source V$_{cc}$ via the resistances R10, R11, and its emitter connected to the ground. And the photodiode PD2 has its anode connected to the ground and its cathode connected to a path between the resistance R10 and the resistance R11. Such a configuration achieves the carrier discharging circuit 30 having a simple structure yet capable of discharging the residual carrier out of the base at a high speed.

The amplifiers 10, 20 respectively include a feedback resistance R4, R8, the resistance value of which serves as a parameter to determine the amplification factor of the amplifiers 10, 20. Accordingly, simply adjusting the resistance value of the feedback resistance R4, R8 allows readily setting an amplification factor as desired. Further, increasing the amplification factor does not affect the high-speed operation of the isolator 1, as described above.

The isolator 1 includes a plurality of amplifiers 10, 20, and the carrier discharging circuit 30 is connected to the base of the bipolar transistors Q1, Q4 respectively included in the amplifiers 10, 20. This allows achieving a still greater amplification factor of the isolator 1 as a whole, while maintaining the high-speed operation. Here, it is not imperative that the isolator 1 includes a plurality of amplifiers, but the isolator 1 may have just one amplifier.

The isolator 1 includes the bipolar transistor Q5 that constitutes the output stage of the isolator 1, and the carrier discharging circuit 30 is also connected to the base of the bipolar transistor Q5. Since such structure allows the carrier discharging circuit 30 to discharge a residual carrier accumulated in the base of the bipolar transistor Q5, the high-speed operation of the isolator is not affected.

The isolator according to the present invention is not limited to the foregoing embodiment, but various modifications may be made. To cite a few examples, while a photodiode is employed as the input element in the embodiment, the input element may be a photoelectric converter of a different type, or an electromagnetic converter such as a coil.

It is apparent that the present invention is not limited to the above embodiment, and that may be modified and changed without departing from the scope and spirit of the invention.

**Claims**

1. An isolator comprising:

   an input element inputting a signal from a signal source and outputting said signal in a form of an electrical signal;
   an amplifier including a bipolar transistor and amplifying said electrical signal output by said input element; and
   a carrier discharging circuit connected to a base of said bipolar transistor and discharging, when said input element is off, a carrier accumulated in said base when said input element is on.

2. The isolator according to claim 1, wherein said carrier discharging circuit includes a second bipolar transistor in which a portion between a collector and an emitter serves as a part of a discharging path of said carrier; and said second bipolar transistor is set to be off.when said input element is on, and to be on when said input element is off.

3. The isolator according to claim 2, wherein this isolator is a photo isolator having a first photodiode serving as said input element; and said carrier discharging circuit includes a second photodiode switching said second bipolar transistor on and off.

4. The isolator according to claim 3, wherein said second bipolar transistor has its collector connected to said base of said bipolar transistor included in said amplifier, its base connected to a power source via a first and a second resistances serially connected to each other, and its emitter connected to the ground; and

said second photodiode has its anode connected to the ground, and its cathode connected to a path between said first resistance and said second resistance.

5. The isolator according to claim 1, wherein said amplifier includes a feedback resistance, a resistance value of which serves as a parameter to determine an amplification factor of said amplifier.

6. The isolator according to claim 1, wherein there are provided a plurality of said amplifiers, and said carrier discharging circuit is connected to a base of a bipolar transistor included in each said amplifier.

7. The isolator according to claim 1, further comprising a third bipolar transistor constituting an output stage of this isolator,
wherein said carrier discharging circuit is connected to a base of said third bipolar transistor.

FIG. 1

WHEN LED IS ON : ——→

WHEN LED IS OFF : ----→

FIG. 2

FIG. 3

① OUTPUT OF 1st Amp   ② OUTPUT OF 2nd Amp   SOLID LINE : WHEN Rfb IS LOW

DOTTED LINE: WHEN Rfb IS HIGH

FIG. 4A

$$B = -\frac{R_8}{R_5}A$$

LED ON   OFF          LED ON   OFF

③ PERFORMANCE OF PHOTO ISOLATOR

FIG. 4B